# EUROPÄISCHE PATENTANMELDUNG

(11) **EP 1 493 565 A2**
(43) Veröffentlichungstag der Anmeldung: **05.01.2005**
(21) Anmeldenummer: 04102790.5
(22) Anmeldetag: 18.06.2004
(51) Int. Cl.: B41F 13/08, B41F 33/00, F16C 13/00, D21G 1/00

(54) **Walze mit integriertem Drucksensor auf der Umfangsoberfläche**

(30) Priorität: 01.07.2003 DE 10329430
(71) Anmelder: Koenig & Bauer Aktiengesellschaft, 97080 Würzburg (DE)
(72) Erfinder: Glöckner, Erhard, 97246 Eibelstadt (DE); Keller, Bernd, 97204 Höchberg (DE)

(57) **Zusammenfassung**

Eine Walze (01) trägt an ihrem Umfang wenigstens einen Drucksensor (07), der ein Material mit piezoelektrischen Eigenschaften aufweist, welches an in Dickenrichtung des Drucksensors verlaufenden Fasern (19) gebunden ist.

## Beschreibung

Die Erfindung betrifft eine Walze mit integriertem Drucksensor, sowie eine Maschine mit einer derartigen Walze gemäß dem Oberbegriff des Anspruchs 1 bzw. 16 oder 19.

Eine Walze dieses Typs ist z. B. aus DE 199 30 600 A1 bekannt. In dieser Schrift wird vorgeschlagen, als druck- oder/und zugsensitives Element einen Dehnungsmessstreifen in eine Walze einzubauen, z. B. an der Innenfläche eines Walzenzylinders oder an der Außenfläche eines solchen Zylinders und durch eine Deckschicht aus Gummi, Kunststoff oder dergleichen geschützt. Wenn die Walze im Betrieb rotiert, ermöglicht ein solcher Drucksensor die Erfassung des Drucks in einem Spalt zwischen der Walze und einem Widerlager, wenn der Sensor diesen Spalt passiert.

Eine solche punktuelle Messung des Drucks kann jedoch durch Schwingungen der Walze verfälscht sein. Insbesondere der Einfluss von mit der Drehfrequenz der Walze angeregten erzwungenen Schwingungen kann mit einem solchen Sensor nicht erfasst werden, da er den Druck stets in einer unbestimmten Phasenlage einer solchen erzwungenen Schwingung misst. Um diesem Problem zu begegnen, empfiehlt DE 199 30 600 A1, eine Mehrzahl von Drucksensoren an der Walze anzuordnen. Bei geeigneter Anordnung der Sensoren ist vorstellbar, dass diese den im Spalt herrschenden Druck jeweils bei unterschiedlichen Phasen von Schwingungen der Walze erfassen, so dass es möglich ist, aus den erhaltenen Druckmesswerten einen quasistationären und einen oszillierenden Anteil zu ermitteln, wobei der quasistationäre Anteil genutzt werden kann, um einen Anpressdruck der Walze gegen das Widerlager im Betrieb nachzuregeln und der oszillierende Anteil genutzt werden kann, um Amplitude und Phase von Schwingungen der Walze zu erfassen und diesen Schwingungen durch Ausüben einer mit geeigneter Phase und Frequenz oszillierenden Kraft auf die Walze entgegenzuwirken.

In der zitierten Schrift ist ausgeführt, dass ein einzelner dieser Sensoren Schwingungen der Walze nur an einer bestimmten Stelle der Walze erfassen kann. Die Auflösung, mit der die Schwingungen der Walze erfasst werden können, ist also begrenzt durch die Zahl der an ihr angebrachten Sensoren. Die große Zahl von benötigten Sensoren macht die bekannte Walze aufwändig und kostspielig. Darüber hinaus bringt die Vielzahl von Sensoren das Problem mit sich, dass Streuungen in der Empfindlichkeit der Sensoren dazu führen können, dass von den verschiedenen Sensoren nacheinander bei ihrem Durchgang durch den Spalt gelieferte Messsignale auch dann voneinander abweichen, wenn der im Spalt herrschende Druck tatsächlich konstant ist, so dass eine Schwingung auch dann erfasst wird, wenn in Wirklichkeit keine vorhanden ist. In einem solchen Fall wird durch den Versuch, der scheinbaren Schwingung entgegenzuregeln, erst eine Schwingung der Walze angeregt.

Aus DD 233 653 A1 ist eine Walze für eine Druckmaschine bekannt, bei der ein Drucksensor den Umfang der Walze umhüllend angebracht ist. Ein solcher Sensor erlaubt im Prinzip eine kontinuierliche Erfassung des zwischen der Walze und einem Widerlager herrschenden Drucks. Bei mehreren Nipps ist eine Auflösung pro Nipp nicht mehr möglich. Als Ausführungsbeispiel für einen solchen Sensor wird eine Elektretfolie genannt. Da nur ein einziger Sensor zum Einsatz kommt, entfällt das oben geschilderte Problem streuender Empfindlichkeiten bei mehreren Sensoren. Dennoch hat sich die Lehre von DD 233 653 A1 in der Praxis nicht durchgesetzt, da die Langzeitstabilität einer solchen Elektretfolie praktischen Anforderungen nicht genügt. Eine Druckwalze kann im Betrieb typischerweise Temperaturen von 60 °C und darüber erreichen, bei denen die elektrische Polarisation der Elektretfolie dazu neigt, sich schnell auszugleichen, so dass die Empfindlichkeit des Sensors im Laufe des Betriebs alsbald abnimmt.

Durch die DE 199 63 945 C1 sind Piezoelemente im Bereich einer Mantelfläche einer Walze bekannt, welche durch Längenänderung in axialer Richtung der Walze einer Durchbiegung der selben entgegenwirken. Die Piezoelemente können hiefür als geschichtete Piezofäden ausgebildet sein, welche bei Anlegen einer Spannung ihre Länge ändern.

In der DE 199 54 020 A1 ist ein Fasern aufweisender Messkörper offenbart, welcher durch Schneiden einer flachen Scheibe aus einem Block hergestellt ist, wobei die Schnittebene derart gewählt ist, dass die Richtung der Fasern senkrecht zur Dickenrichtung verläuft.

Der Erfindung liegt die Aufgabe zugrunde, eine Walze mit integriertem Drucksensor und eine Maschine mit einer derartigen Walze zu schaffen.

Die Aufgabe wird erfindungsgemäß durch die Merkmale des Anspruchs 1 bzw. 16 oder 19 gelöst.

Die mit der Erfindung erzielbaren Vorteile bestehen insbesondere darin, dass das anorganische piezoelektrische Material eine ausgezeichnete Langzeitstabilität auch bei erhöhten Umgebungstemperaturen aufweist.

Die Herstellung von großflächigen Drucksensoren mit homogener Empfindlichkeit, die eine Überwachung des auf die Walze wirkenden Drucks auf einem großen Teil ihres Umfangs erlaubt, ist dadurch erleichtert, dass das piezoelektrische Material in eine Vergussmasse eingebettet ist.

Eine anisotrope Ausrichtung des piezoelektrischen Materials wird dadurch erreicht, dass das Material an ausgerichtete Fasern gebunden ist. Die Bindung an die Fasern erleichtert auch die elektrische Kontaktierung des piezoelektrischen Materials.

Die das piezoelektrische Material kontaktierenden Elektroden sind vorzugsweise an zwei entgegengesetzten Oberflächen eines das piezoelektrische Material enthaltenen Messkörpers angeordnet, wobei die Fasern im Wesentlichen quer zu diesen Oberflächen ausgerichtet sind.

Um eine in radialer Richtung der Walze wirkende Druckkraft zu messen, sind die die Elektroden aufweisenden Oberflächen des Messkörpers vorzugsweise konzentrisch zum Umfang der Walze angeordnet.

Als Vergussmasse kommt ein elektrisch isolierendes und das piezoelektrische Material vor dem Einfluss aggressiver chemischer Substanzen schützendes Material, insbesondere ein Epoxidharz, in Frage.

Um den Drucksensor anzubringen, kann in der Walze eine Aussparung gebildet sein. Insbesondere wenn die Walze ein Formzylinder ist, kann die Aussparung in einer an dem Formzylinder montierten Druckplatte, insbesondere in Form eines Ausschnittes, gebildet sein.

Wenn die Walze eine flexible Außenschicht wie etwa ein Gummituch aufweist, ist die Aussparung vorzugsweise in der Außenschicht gebildet.

Denkbar ist auch, den Sensor in eine flexible Außenschicht der Walze materialschlüssig einzubetten. Zwar macht dies einen Austausch des Sensors erforderlich, wenn die flexible Außenschicht abgenutzt ist und ausgetauscht werden muss, doch ist die Anbringung des Sensors auf der Walze auf diese Weise erheblich vereinfacht.

Gegenstand der Erfindung ist auch eine Maschine, insbesondere eine Druckmaschine, mit einer Walze wie oben beschrieben und einem Widerlager, die gemeinsam einen Bearbeitungsspalt begrenzen. Bei einer solchen Maschine ist die Länge, über die sich der Sensor in Umfangsrichtung der Walze erstreckt, gleich wenigstens einem Viertel, vorzugsweise wenigstens gleich der Hälfte des Produkts aus, Umfang und einer Arbeits-Drehfrequenz (z. B. 1 bis 25 Hz) dividiert durch eine zu erfassende Frequenz der Walze (z. B. 80 bis 300 Hz), mit der die Walze in der Maschine betrieben wird, gewählt. Eine Länge von einem Viertel dieses Produkts ermöglicht die Erfassung des auf die Walze wirkenden Drucks während einer Viertelperiode der zu erfassenden Schwingung. Wenn sichergestellt ist, dass diese Viertelperiode einen Nulldurchgang und ein Maximum der Schwingung enthält, kann hieraus die Amplitude der Schwingung und folglich auch die Amplitude einer auf die Walze auszuübenden oszillierenden Kraft bestimmt werden, mit der der Schwingung entgegengewirkt wird. Wenn die Länge wenigstens die Hälfte des besagten Produkts beträgt, so ist unabhängig von der Phase der Schwingung gewährleistet, dass im Verlauf des vom Sensor gelieferten Messsignals ein Nulldurchgang und ein Maximum enthalten ist, und Amplitude und Phase der Schwingung können bestimmt werden. Wenn die Länge des Sensors dem gesamten besagten Produkt entspricht, so erstreckt sich das von dem Sensor gelieferte Messsignal über eine vollständige Periode der Schwingung, so dass Unsicherheiten bei der Bestimmung eines Nulldurchgangs das Erfassungsergebnis nicht beeinträchtigen können.

Die zu erfassende Schwingung kann eine durch bei der Drehung der Walze variabel einwirkende Kräfte angeregte erzwungene Schwingung sein; es kann sich auch um eine Resonanzschwingung der Walze handeln.

Ausführungsbeispiele der Erfindung sind in den Zeichnungen dargestellt und werden im folgenden näher beschrieben.

Es zeigen:
- Fig. 1: eine schematische perspektivische Ansicht eines Teils einer Druckmaschine mit zwei Walzen, darunter eine gemäß der Erfindung;
- Fig. 2: eine schematische perspektivische Ansicht eines in der Walze eingesetzten Drucksensors;
- Fig. 3: einen schematischen Schnitt durch den Drucksensor aus Fig. 2;
- Fig. 4: einen Teilschnitt durch eine Walze mit einem in eine flexible Außenschicht der Walze eingebetteten Drucksensor;
- Fig. 5: eine Teilansicht einer Walze mit einem in eine Aussparung einer Außenschicht eingebetteten Sensor;
- Fig. 6: einen Teilschnitt durch eine Walze mit einem in eine Aussparung eines festen Mantels der Walze eingebetteten Sensor.

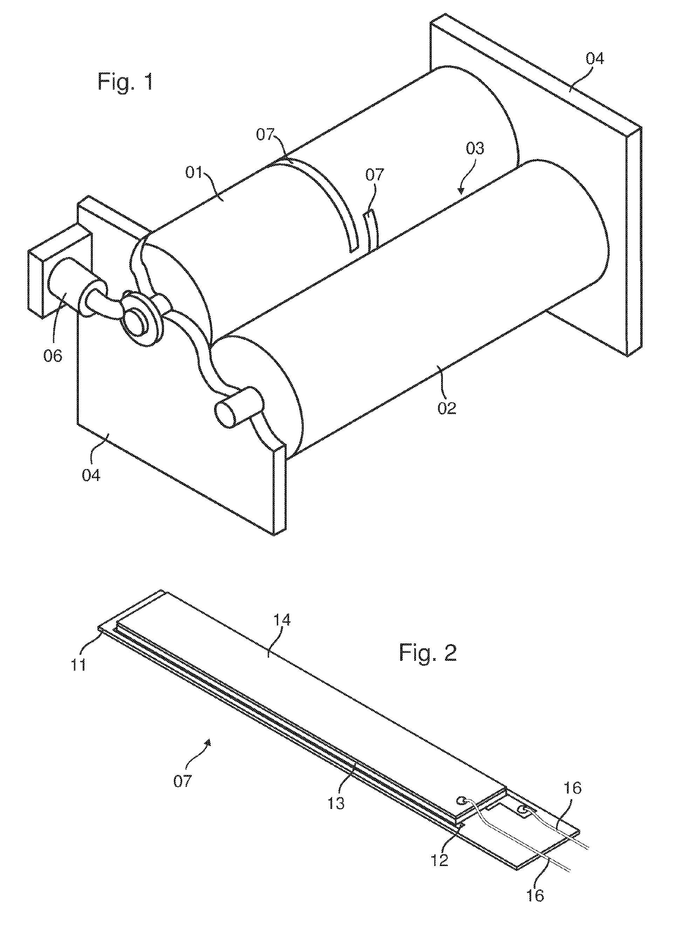

Fig. 1 zeigt eine perspektivische Teilansicht eines Druckwerks als Beispiel für eine Maschine, insbesondere Druckmaschine. Zwei Walzen 01; 02 begrenzen einen Druckspalt 03, in welchem eine (nicht dargestellte) den Druckspalt 03 durchlaufenden Materialbahn bedruckt werden kann, wobei die Walzen 01; 02 Druck aufeinander ausüben. Wenn das Druckwerk ein Offset-Druckwerk ist, ist die Walze 01 ein Zylinder 01, z. B. ein Gummituchzylinder 01 und die Walze 02, z. B. ihr Zylinder 02, ihr Gegendruckzylinder 02; bei einem Druckwerk für andere Drucktechniken handelt es sich bei der Walze 01, z. B. um einen Formzylinder 01.

Letzteres kann auch im Offset der Fall sein, wenn die Walze 02 dann einen Übertragungszylinder 02 oder eine Walze 02 eines Farbwerkes darstellt. Die beiden Walzen 01; 02 bilden dann allgemein betrachtet eine Nippstelle 03 oder auch einen Walzenspalt 03.

Die Walzen 01; 02 sind an ihren Enden in Seitengestellplatten 04 drehbar gelagert. Eine der Walzen 01; 02, hier die Walze 01, ist mit Hilfe von zwei an ihren Enden angreifenden Stellgliedern 06, von denen nur eines in der Fig. 1 gezeigt ist, quer zur Ebene des Druckspalts 03 verschiebbar, um im Bedarfsfall die Walzen 01; 02 von einander abzurücken und im Betrieb den Druck der Walzen 01; 02 gegeneinander einzustellen. Unter Walze 01; 02 ist im folgenden auch ein Zylinder 01; 02 zu verstehen.

In der Fig. 1 sind zwei streifenförmige Drucksensoren 07 an der Außenfläche der Walze 01 zu erkennen. Die Drucksensoren 07 sind in einem mittleren Bereich der Walze 01 angeordnet. Bei einem Druckwerk mit einer Breite entsprechend einer geraden Zahl von Seiten druckt der mittlere Bereich, in dem sich die Drucksensoren 07 befinden, im Allgemeinen nicht, so dass eventuelle Inhomogenitäten in den Eigenschaften der Walzenoberfläche, die auf das Vorhandensein der Drucksensoren 07 zurückgehen könnten, sich auf das Druckbild nicht auswirken.

Die mittige Anordnung der Drucksensoren 07 ist außerdem bevorzugt, weil in diesem Bereich der Walzen der zwischen ihnen wirkende Druck am stärksten von eventuellen Schwingungen der Walzen 01; 02 abhängt.

Die Breite der Drucksensoren 07 ist in der Fig. 1 der klareren Darstellung wegen übertrieben, in der Praxis beträgt die Breite der Sensoren vorzugsweise zwischen 1 und 20 mm, insbesondere 1 und 10 mm.

Die zwei Drucksensoren 07 in Fig. 1 überlappen partiell auf dem Umfang der Walze 01, so dass eine lückenlose Überwachung des im Druckspalt 03 herrschenden Druckes möglich ist. Die für die Drucksensoren 07 gewählte Länge hängt ab von einer im Betrieb des Druckwerks vorgesehenen Rotationsfrequenz der Walzen 01; 02 und der Frequenz von Schwingungen, die im Betrieb angeregt werden können. Dabei kann es sich um erzwungene Schwingungen mit der Drehfrequenz der Walzen 01; 02 oder einer Harmonischen davon handeln, oder um freie Schwingungen, deren Frequenz durch die Konstruktion der Walzen 01; 02 bestimmt ist. Bei einer erzwungenen Schwingung liegt die Phase der Schwingung in Bezug auf die Phase der Drehung der Walzen 01; 02 fest, so dass die Drucksensoren 07 bei jedem Durchgang durch den Druckspalt 03 der gleichen Phase der Schwingung ausgesetzt sind. Dadurch ist es mit einem Drucksensor 07, der sich über ein Viertel des Umfangs der Walze 01 erstreckt, möglich, ein Phasenintervall von 90° zu überwachen, das bei geeigneter Positionierung des Drucksensors 07 auf der Walze 01 ein Extremum und einen Knoten der Schwingung enthalten kann, so dass aus der zeitlichen Entwicklung des vom Drucksensor 07 beim Durchgang durch den Druckspalt 03 gelieferten Signals auf die Amplitude der erzwungenen Schwingung geschlossen werden kann. Freie Resonanzschwingungen der Walze 01 können in Bezug auf deren Drehung beliebige Phasenlagen haben, so dass die Länge des Drucksensors 07 in Umfangsrichtung der Walze 01 wenigstens so groß sein muss, dass der Drucksensor 07 ein Phasenintervall der Resonanzschwingung von 180° erfasst, um garantieren zu können, dass im erfassten Bereich jeweils wenigstens ein Extremum und ein Knoten liegen.

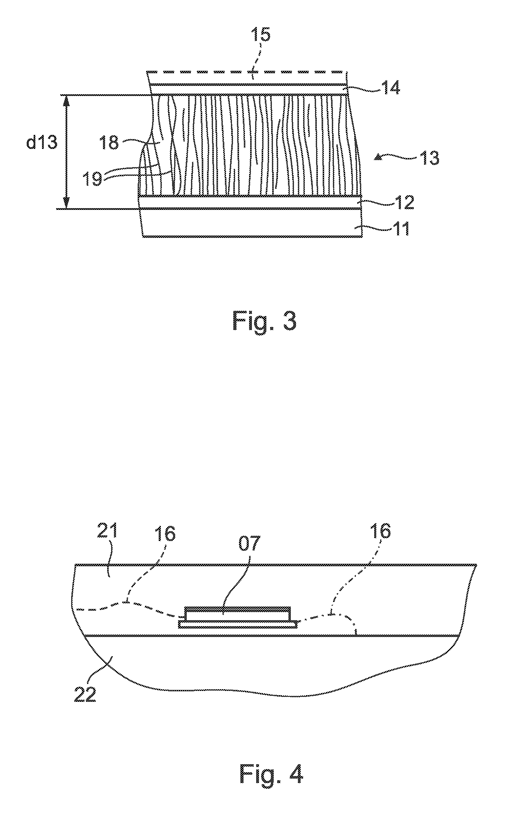

Fig. 2 zeigt in einer perspektivischen Darstellung schematisch den Aufbau eines Drucksensors 07; Fig. 3 zeigt einen Teilschnitt durch den Drucksensor 07. Der Drucksensor 07 ist aus einer Mehrzahl von Schichten aufgebaut, von unten nach oben in der Fig. 2 oder 3 eine flexiblen Trägerschicht 11, die z. B. aus einem aus der Herstellung von flexiblen Leiterplatten für die Elektronik bekannten Material wie etwa Polyamidfolie bestehen kann, eine darauf aufgebrachte erste Elektrode 12, ein Messkörper 13, der piezoelektrisches Verhalten zeigt, und eine zweite Elektrode 14. Anschlussdrähte 16 sind an die zweite Elektrode 14 und einen unter dem Messkörper 13 vorstehenden Abschnitt der ersten Elektrode 12 gelötet. Vorteilhafter Weise weist der Drucksensor 07 eine in Fig. 2 nicht und in Fig. 3 strichliert dargestellte, elektrisch nichtleitende Abdeckung 15 auf.

Der Messkörper 13 besteht aus einem Verbundmaterial, das ein mineralisches piezoelektrisches Material gebunden an in eine Vergussmasse 18 eingebettete, ausgerichtete Fasern 19 enthält. Die Herstellung eines solchen Messkörpers ist in DE 199 54 020 A1 beschrieben, so dass hierauf an dieser Stelle nicht weiter eingegangen werden muss. Geeignete Fasern 19 und piezoelektrische Materialien sowie Verfahren, diese Materialien an die Fasern 19 zu binden, sind aus US 47 26 999 A bekannt.

Der Messkörper 13 ist hergestellt durch Schneiden einer flachen Scheibe aus einem wie in DE 199 54 020 A1 beschrieben hergestellten Block, wobei die Schnittebene gemäß der vorliegenden Erfindung jedoch senkrecht zur Richtung in der Fasern 19 gewählt ist, so dass sich diese, wie in Fig. 3 gezeigt, im Wesentlichen quer zur Oberflächen der Elektroden 12; 14 durch den Messkörper 13 erstrecken. D. h. die Vorzugsrichtung der Fasern 19 verläuft im wesentlichen in Dickenrichtung des Drucksensors 07 bzw. dessen Messkörper 13 und nicht in dessen flächige Längs- oder Querausdehnung. Die Dicke d13 des Messkörpers 13 entspricht vorteilhaften Weise maximal einem Drittel, insbesondere höchstens einem Fünftel, dessen Breite b in axialer Richtung der Walze und maximal einem Zehntel, insbesondere einem Zwanzigstel, dessen Länge I in Umfangsrichtung der Walze. Vorzugsweise ist der Messkörper 13 im Bereich der gesamten wirksame Fläche (Länge und Breite) des Drucksensors 07 einstückig ausgeführt, D. h. es sind keine nebeneinander angeordnete einzelne Bereiche vorgesehen, sondern der Messkörper stellt einen durchgehenden Messstreifen, durchgehend elektrodiert bzw. durchgehend kontaktiert dar. Im montierten Zustand des Drucksensors 07 verlaufen die Fasern 19 dann im wesentlichen radial zur Walze 01. Eine Piezospannung, die proportional zu einer in Normalenrichtung auf die Oberflächen der Elektroden 12; 14 einwirkenden Druckkraft ist, kann an den Elektroden 12; 14 abgegriffen werden.

Fig. 4 zeigt einen Teilschnitt durch einen Gummituchzylinder 01 als Ausführungsbeispiel für eine Walze 01. Die Ebene des Schnitts der Fig. 4 ist parallel zur Achse des Gummituchzylinders 01; gezeigt ist ein Teil der Außenschicht 21, z. B. des Gummituches 21 sowie eines starren Zylindermantels 22, z. B. aus Stahl, auf dem das Gummituch 21 aufgezogen ist. Ein Drucksensor 07 vom in Bezug auf Fig. 2 und 3 beschriebenen Typ ist in das Gummituch 21 eingebettet und vom Material des Gummituchs 21 rings umgeben. Die Anschlussdrähte 16 zum Ableiten des Messsignals des Drucksensors 07 können ebenfalls in das Gummituch 21 eingebettet sein, wie in der Fig. 4 als gestrichelte Linie angedeutet, oder sie können auf die Innenseite des Gummituchs 21 geführt sein, wie durch die strichpunktierte Linie in Fig. 4 dargestellt, wo das Messsignal über die leitfähige Oberflächen des metallischen Zylindermantels 22 abgeführt wird. Möglich ist auch, an der dem Zylindermantel 22 zugewandten Innenseite des Gummituchs 21 eine flexible Leiterplatte anzuordnen, auf der mehrere gegen den Zylindermantel 22 isolierte Leiterbahnen verlaufen, über die Messsignale des Drucksensors 07 oder gegebenenfalls einer Mehrzahl von Drucksensoren 07 abgeführt werden können. Wenn eine solche flexible Leiterplatte sich über die gesamte Trägerschicht 11 eines Drucksensors 07 erstreckt und rings um die Trägerschicht 11 herum dicht mit dem Material des Gummituchs 21 verbunden ist, kann in ähnlicher Weise wie durch die in Fig. 4 gezeigte Einbettung ein wirksamer Schutz des Drucksensors 07 gegen den Kontakt mit in der Drucktechnik verwendeten aggressiven Flüssigkeiten verhindert werden.

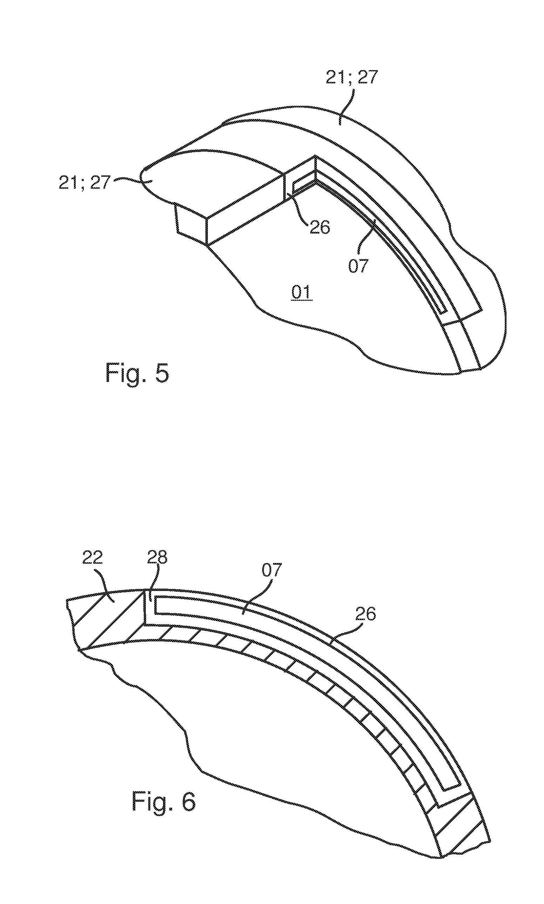

Die Einbettung des Drucksensors 07 in das Gummituch 21 gemäß dem Ausführungsbeispiel der Fig. 3 bringt es mit sich, dass der Drucksensor 07 mit dem Gummituch 21 ausgetauscht werden muss, wenn letzteres verschlissen ist. Dieses Problem wird vermieden bei der in Fig. 5 dargestellten Ausgestaltung der Erfindung. Fig. 5 zeigt eine perspektivische Teilansicht einer Walze 01 gemäß einer alternativen Ausgestaltung, bei der der in eine schützende Masse 26, z. B. Kunststoffmasse 26, hermetisch dicht eingebettete Drucksensor 07 (der in der Fig. 5 teilweise aufgeschnitten gezeigt ist) in eine Aussparung des Gummituchs 21 eingefügt ist.

Eine ähnliche Ausgestaltung eignet sich auch für die Anwendung bei Formzylindern 01 für Hoch- oder Tiefdruck; hier sind es auf dem Zylindermantel 22 montierte Formplatten 27, die die Aussparung zur Aufnahme des Drucksensors 07 aufweisen. In diesem Fall ist es bevorzugt, den Drucksensor 07 in einem nicht druckenden Bereich an der Grenze zwischen zwei Formplatten 27 unterzubringen, so dass die Aussparung, die den Drucksensor 07 aufnimmt, meist die Form eines randoffenen Ausschnittes am Rand der Formplatte 27 hat.

Fig. 6 zeigt ein weiteres Ausführungsbeispiel einer Walze 01 in einem Teilschnitt senkrecht zu deren Längsachse. Bei dieser Walze 01 ist eine Aussparung 28 in Form eines in Umfangsrichtung gefrästen Kanals 28 in einem starren Zylindermantel 22 der Walze gebildet, die den in die schützende Kunststoffmasse 26 eingebetteten Drucksensor 07 aufnimmt. Bei dieser Ausgestaltung kann der Drucksensor 07 wesentlich länger im Einsatz bleiben als eine eventuell auf dem Zylindermantel 22 aufgezogene verschleißgefährdete Oberflächenschicht; sie auch geeignet, wenn der Zylindermantel 22 in Betrieb selbst die Außenfläche der Walze 01 bildet und keine weitere Schicht trägt.

Die Masse 26 kann auch metallisch ausgeführt sein. Die dargestellte Walze 01 kann für alle Figuren als Hohlkörper oder als Vollkörper (Vollzylinder) ausgeführt sein.

### Bezugszeichenliste

- 01: Walze, Zylinder, Gummituchzylinder, Formzylinder
- 02: Walze, Zylinder, Gegendruckzylinder, Übertragungszylinder
- 03: Druckspalt, Nippstelle, Walzenspalt
- 04: Seitengestellplatte
- 05: -
- 06: Stellglied
- 07: Drucksensor
- 08: -
- 09: -
- 10: -
- 11: Trägerschicht
- 12: Elektrode, erste
- 13: Messkörper
- 14: Elektrode, zweiter
- 15: Abdeckung, nichtleitend
- 16: Anschlussdraht
- 17: -
- 18: Vergussmasse
- 19: Faser
- 20: -
- 21: Au ßenschicht, Gummituch
- 22: Zylindermantel
- 23: -
- 24: -
- 25: -
- 26: Kunststoffmasse
- 27: Formplatte
- 28: Aussparung, Kanal

## Patentansprüche

1. Walze (01), die an ihrem Umfang wenigstens einen Drucksensor (07) trägt, wobei der Drucksensor (07) ein Material mit piezoelektrischen Eigenschaften aufweist, **dadurch gekennzeichnet, dass** das piezoelektrische Material an Fasern (19) gebunden ist, welche im wesentlichen in Dickenrichtung des Drucksensors (07) verlaufen.

2. Walze nach Anspruch 1, **dadurch gekennzeichnet, dass** das piezoelektrische Material in eine Vergussmasse (18) eingebettet ist.

3. Walze nach Anspruch 1 oder 2, **dadurch gekennzeichnet, dass** die Fasern (19) des Drucksensors (07) im wesentlichen in zur Walze (01) radialer Richtung verlaufen.

4. Walze nach Anspruch 3, **dadurch gekennzeichnet, dass** ein das piezoelektrische Material enthaltender Messkörper (13) an zwei entgegengesetzten Oberflächen Elektroden (12; 14) aufweist und dass die Fasern (19) im Wesentlichen quer zu diesen Oberflächen ausgerichtet sind.

5. Walze nach Anspruch 4, **dadurch gekennzeichnet, dass** die die Elektroden (12; 14) aufweisenden Oberflächen des Messkörpers (13) konzentrisch zum Umfang der Walze (01) sind.

6. Walze nach einem der Ansprüche 2 bis 5, **dadurch gekennzeichnet, dass** die Vergussmasse (18) ein Epoxidharz ist.

7. Walze nach einem der vorhergehenden Ansprüche, **dadurch gekennzeichnet, dass** der Drucksensor (07) in eine Aussparung (28) der Walze (01) eingebettet ist.

8. Walze nach Anspruch 7, **dadurch gekennzeichnet, dass** die Walze (01) als Formzylinder (01) ausgeführt ist und dass die Aussparung in einer an dem Formzylinder (01) montierten Druckplatte (27) gebildet ist.

9. Walze nach Anspruch 7, **dadurch gekennzeichnet, dass** die Walze (01) eine flexible Au ßenschicht (21), aufweist, und dass die Aussparung in der Au ßenschicht (21) gebildet ist.

10. Walze nach Anspruch 9, **dadurch gekennzeichnet, dass** die Außenschicht (21) als Gummituch (21) ausgebildet ist.

11. Walze nach einem der Ansprüche 1 bis 6, **dadurch gekennzeichnet, dass** der Drucksensor (07) in eine flexible Außenschicht (21) der Walze (01) materialschlüssig eingebettet ist.

12. Walze nach Anspruch 1, **dadurch gekennzeichnet, dass** die Walze (01) in einem Druckwerk einer Druckmaschine angeordnet ist.

13. Walze nach Anspruch 1, **dadurch gekennzeichnet, dass** das Material als anorganisches Material ausgebildet ist.

14. Walze nach Anspruch 4, **dadurch gekennzeichnet, dass** eine Dicke (d13) des Messkörpers (13) maximal einem Drittel von dessen Breite (b) in axialer Richtung der Walze (01) entspricht.

15. Walze nach Anspruch 4, **dadurch gekennzeichnet, dass** eine Dicke (d13) des Messkörpers (13) maximal einem Zehntel von dessen Länge (I) in Umfangsrichtung der Walze (01) entspricht.

16. Maschine mit einer Walze (01) nach einem der vorhergehenden Ansprüche und einem Widerlager, das gemeinsam mit der Walze (01) eine Nippstelle (03) begrenzt, **dadurch gekennzeichnet, dass** der Drucksensor (07) sich in Umfangsrichtung der Walze (01) über eine Länge erstreckt, die wenigstens dem 0,25-fachen des Produkts aus einem Umfang und einer Arbeits-Drehfrequenz der Walze (01) dividiert durch eine Schwingfrequenz der Walze (01) entspricht.

17. Maschine nach Anspruch 16, **dadurch gekennzeichnet, dass** der Drucksensor (07) sich in Umfangsrichtung der Walze (01) über eine Länge erstreckt, die wenigstens dem 0,5-fachen des Produkts aus einem Umfang und einer Arbeits-Drehfrequenz der Walze (01) dividiert durch eine Schwingfrequenz der Walze (01) entspricht.

18. Maschine nach Anspruch 16, **dadurch gekennzeichnet, dass** der Drucksensor (07) sich in Umfangsrichtung der Walze (01) über eine Länge erstreckt, die dem 1 fachen des Produkts aus einem Umfang und einer Arbeits-Drehfrequenz der Walze (01) dividiert durch eine Schwingfrequenz der Walze (01) entspricht.

19. Maschine mit einer Walze (01) nach einem der vorhergehenden Ansprüche und einem Widerlager, das gemeinsam mit der Walze (01) eine Nippstelle (03) begrenzt, insbesondere Maschine nach Anspruch 13, **dadurch gekennzeichnet, dass** der Walze (01) und/oder dem Widerlager eines Stellgliedes (06) zum Ausüben einer mit dem Messsignal des wenigstens einen Drucksensors (07) modulierten Kraft auf die Walze (01) bzw. das Widerlager zugeordnet ist.

20. Maschine nach einem der Ansprüche 16 bis 19, **dadurch gekennzeichnet, dass** das Widerlager durch eine zweite Walze (02) gebildet ist.
